(19)

**Europäisches Patentamt**
**European Patent Office**
**Office européen des brevets**

(11) **EP 4 752 094 A1**

(12) **EUROPEAN PATENT APPLICATION**

(43) Date of publication:
03.06.2026 Bulletin 2026/23

(21) Application number: 25214995.0

(22) Date of filing: 11.11.2025

(51) International Patent Classification (IPC):
**B66B 5/00** (2006.01)

(52) Cooperative Patent Classification (CPC):
**B66B 5/0025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 28.11.2024 CN 202411729573

(71) Applicant: **Otis Elevator Company**
**Farmington, Connecticut 06032 (US)**

(72) Inventors:
• **Zhu, Fei**
**Shanghai, 200335 (CN)**
• **Li, Haiyang**
**Shanghai, 200335 (CN)**

• **Gu, Jialiang**
**Shanghai, 200335 (CN)**
• **Chen, Yalin**
**Shanghai, 200335 (CN)**
• **Zhao, Xueqi**
**Shanghai, 200335 (CN)**
• **Kang, Kai**
**Shanghai, 200335 (CN)**
• **Tang, Xiaobin**
**Shanghai, 200335 (CN)**
• **Wang, Chao**
**Shanghai, 200335 (CN)**

(74) Representative: **Schmitt-Nilson Schraud Waibel Wohlfrom**
**Patentanwälte Partnerschaft mbB**
**Pelkovenstraße 143**
**80992 München (DE)**

(54) **METHOD AND APPARATUS FOR ANALYSING OUT-OF-SERVICE EVENT OF ELEVATOR SYSTEM**

(57) The present disclosure relates to the technologies of elevators, and in particular, to a method and an apparatus for analyzing an out-of-service event of an elevator system, a non-transitory computer-readable storage medium for storing computer programs/instructions for implementing the method, and a computer program product. According to one aspect of the present disclosure, a method for analyzing an out-of-service event of an elevator system is provided. In response to the occurrence of an out-of-service event, the aforementioned method generates a first feature, a second feature, and a third feature, and uses a first machine learning model to determine the necessity of handling the out-of-service event based on the first feature, the second feature, and the third feature. In the aforementioned method, the first feature is used to describe the likelihood of equipment failure occurring in the elevator system, the second feature is used to describe the equipment failure occurrence characteristics of a reference elevator system with a similar operational environment to the elevator system, and the third feature is used to describe the equipment failure occurrence characteristics of the elevator system.

FIG. 2

**Description**

The present disclosure relates to the technologies of elevators, and in particular, to a method and an apparatus for analyzing an out-of-service event of an elevator system, a non-transitory computer-readable storage medium for storing computer programs/instructions for implementing the method, and a computer program product.

When an elevator system stops service due to a malfunction, maintenance requests are usually issued by operating personnel, elevator controllers, or cloud computing platforms to instruct maintenance personnel to come to the site for resolution. However, in many cases (e.g., shutdowns caused by human error, misoperations, or transient malfunctions), the system may autonomously resume operation without requiring maintenance personnel to come to the site. The challenge faced by the industry lies in how to identify the events that truly require maintenance personnel to be present from the out-of-service events, in order to provide timely and necessary maintenance services while reducing unnecessary consumption of maintenance resources.

According to one aspect of the present disclosure, a method for analyzing an out-of-service event of an elevator system is provided. In response to the occurrence of an out-of-service event, the aforementioned method generates a first feature, a second feature, and a third feature, and uses a first machine learning model to determine the necessity of handling the out-of-service event based on the first feature, the second feature, and the third feature. In the aforementioned method, the first feature is used to describe the likelihood of equipment failure occurring in the elevator system, the second feature is used to describe the equipment failure occurrence characteristics of a reference elevator system with a similar operational environment to the elevator system, and the third feature is used to describe the equipment failure occurrence characteristics of the elevator system.

According to another aspect of the present disclosure, an apparatus for determining safety risks of an elevator system is provided. The apparatus comprises at least one processor, at least one memory, and a computer program stored on the memory. When the computer program runs on the processor, it will generate a first feature, a second feature, and a third feature in response to the occurrence of an out-of-service event, and use a first machine learning model to determine the necessity of handling the out-of-service event based on the first feature, the second feature, and the third feature. The aforementioned first feature is used to describe the likelihood of equipment failure occurring in the elevator system, the second feature is used to describe the equipment failure occurrence characteristics of a reference elevator system with a similar operational environment to the elevator system, and the third feature is used to describe the equipment failure occurrence characteristics of the elevator system.

According to yet another aspect of the present disclosure, a computer-readable storage medium storing a computer program suitable for execution on a processor of a terminal device is provided, wherein execution of the computer program results in steps of the aforementioned method being executed.

According to still another aspect of the present disclosure, a computer program product comprising a computer program/instruction is provided, wherein steps of the aforementioned method are executed by executing the computer program/instruction by a processor.

Particular embodiments further may include at least one, or a plurality of, the optional features set out in the following detailed description, alone or in combination with each other:

The above and/or other aspects and advantages of the present disclosure will become clearer and easier to understand through the following description of various aspects in conjunction with the accompanying drawings, where the same or similar units are denoted by the same reference numerals in the accompanying drawings. The accompanying drawings include:

FIG. 1 is a view of an exemplary elevator system.

FIG. 2 is a flowchart of a method for analyzing an out-of-service event of an elevator system according to an embodiment of the present disclosure.

FIG. 3 is a flowchart of a method for analyzing an out-of-service event of an elevator system according to another embodiment of the present disclosure.

FIG. 4 is a flowchart of a method for analyzing an out-of-service event of an elevator system according to another embodiment of the present disclosure.

FIG. 5 is a flowchart of a method for analyzing an out-of-service event of an elevator system according to another embodiment of the present disclosure.

FIG. 6 is a flowchart of a method for analyzing an out-of-service event of an elevator system according to another embodiment of the present disclosure.

FIG. 7 is a schematic block diagram of an apparatus for determining safety risks of an elevator system according to other embodiments of the present disclosure.

The present disclosure is described in greater detail below with reference to the accompanying drawings of the illustrative embodiments of the present disclosure. However, the present disclosure may be implemented in different forms and should not be construed as being limited to the embodiments provided herein. The aforementioned embodiments are provided so that the disclosure herein will be comprehensive and complete, so as to more fully convey the protection scope of the present disclosure to those skilled in the art.

In this specification, terms such as "comprise" and "include" indicate that in addition to including the units and steps that are directly and explicitly stated in the description and claims, the technical solutions of the present disclosure do not exclude the scenario that other units and steps that are not directly or explicitly stated are also included.

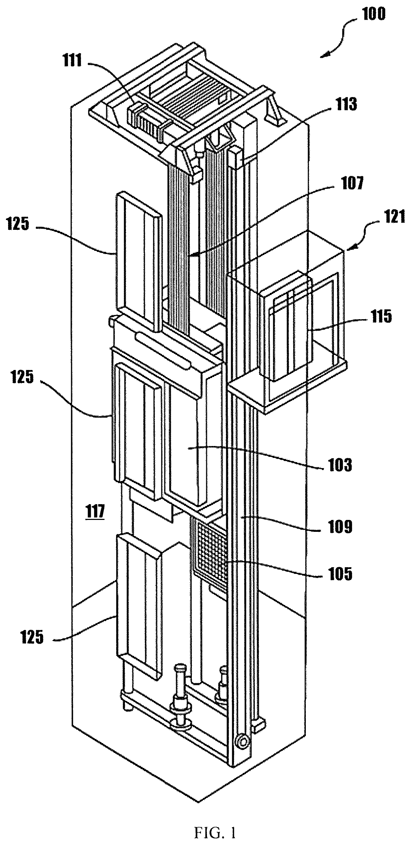

FIG. 1 is a view of an exemplary elevator system. An elevator system 101 shown in FIG. 1 includes an elevator car 103, a counterweight 105, a tension member 107, a guide rail (or rail system) 109, a machine (or machine system) 111, a position reference device 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, where the machine 111 may be a part of an overhead structure of the elevator system 101. The machine 111 is configured to control movement between the elevator car 103 and the counterweight 105. The position reference system 113 can be mounted on a fixed part at the top of the elevator hoistway 117, such as on a support or guide rail, and can be configured to provide position signals related to a position of the elevator car 103 inside the elevator hoistway 117. In other embodiments, the position reference system 113 may be directly mounted onto the mobile components of the machine 111, or may be located in other positions and/or configurations as known in the art. The position reference system 113 may be any device or mechanism for monitoring a position of an elevator car and/or counterweight, as known in the art. As appreciated by those skilled in the art, the position reference system 113 includes, but is not limited to, an encoder, a sensor, or other system, and can implement various sensing such as velocity sensing, absolute position sensing, and the like.

As shown, the controller 115 may be located in a controller room 121 of the elevator hoistway 117 and may be configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference device 113 or any other desired position reference device. When moving up or down within the elevator hoistway 117 along guide rail 109, the elevator car 103 may stop at one or more landings 125 as controlled by the controller 115. Although shown in a controller room 121, those skilled in the art will appreciate that the controller 115 can be located and/or configured in other locations or positions within the elevator system 101. In one embodiment, the controller can be located remotely or located in the cloud.

Machine 111 may include a motor or similar driving mechanism. According to the embodiments of the present disclosure, machine 111 is configured to include an electric drive motor. The power supply for the motor can be any power source, including the power grid, where the power source is combined with other components to be supplied to the motor. Machine 111 may include traction pulleys that transmit force to tension member 107 to move the elevator car 103 within the elevator hoistway 117.

In this specification, the equipment state data of an elevator system refers to parameters or state values describing the operational or working states of various components or units (e.g., various units of the elevator system shown in FIG. 1). In some embodiments of the present disclosure, the types of operational states include, but are not limited to, elevator system operational mode, car movement direction, car current floor, car leveling alignment status, traction machine movement status, car door and landing door opening/closing status, control cabinet fault code, drive unit fault code, and the like.

In this specification, the operational environment of an elevator system refers to the various conditions that the elevator system relies on during operation. Data describing the operational environment (hereinafter referred to as operational environment data) includes, but is not limited to elevator system configuration information (hardware/software), external environment information, and usage status information. In some examples, elevator system configuration information is used to describe the configuration information of various hardware and software, which can be represented, for example, by the model, software name and version number of the elevator system or the equipment included, as well as the maintenance provider of the elevator system. In other examples, external environmental information is used to describe the spatiotemporal environment in which the elevator system is located, which can be, for example, the purpose or property type of the building that houses the elevator system (the purpose can be, for example, school, hospital, shopping mall, residential building, etc.), and the type of current calendar day (the type can be weekday, weekend, holiday, etc.). In yet some examples, usage status information is used to describe the current usage status of the elevator system, which can be, for example, the cumulative service duration of the elevator system and the operational mode of the elevator system when the current out-of-service event occurs (e.g, the operational mode for the unknown cause of elevator shutdown NAV, the maintenance mode INS, and the normal operational mode NOR, etc.).

In this specification, equipment failure occurrence characteristics refer to the features and patterns of equipment failures arising in the elevator system during use. For a plurality of elevator systems with similar operational environments, they usually have similar equipment failure occurrence characteristics. However, this does not mean that the equipment failure occurrence characteristics of these elevator systems are completely consistent, and even high consistency cannot be guaranteed. Due to the complexity of the system, each elevator system usually possesses unique failure occurrence characteristics to some extent compared to other elevator systems.

It is advantageous to describe equipment failure occurrence characteristics in a concise yet accurate manner. To this end, in some examples, for m elevator systems E1... Em with similar operational environments, two dimensions can be adopted to describe the equipment failure occurrence characteristics, namely, the number of maintenance requests triggered by out-of-service events and the proportion of out-of-service events caused by equipment failures relative to the total maintenance requests. The feature vectors containing the above two dimensions are also known as the call maintenance feature vectors, which can be determined, for example, by the following equations:

$$\text{SCU} = \min(\frac{False\ Count+True\ Count}{k}, 1) \qquad (1)$$

$$\text{SCPP} = \frac{True\ Count}{False\ Count+True\ Count} \qquad (2)$$

In the above equations, SCU is used to characterize the characteristics of the m elevator systems with similar operational environments in the dimension of number of maintenance requests. SCPP is used to characterize the characteristics of these elevator systems in the dimension of positive probability. False Count and True Count are respectively the cumulative number of out-of-service events caused by non-equipment failures and the cumulative number of out-of-service events caused by equipment failures for these elevator systems, and k is a positive integer used to standardize the count values or scale them to a specific numerical range.

In other examples, a similar approach can also be used to describe the equipment failure occurrence characteristics for the elevator system Ei that is currently experiencing an out-of-service event. Further, more dimensions can be introduced to characterize the equipment failure characteristics of a single elevator system in a more refined way, such as the example given by the following equations:

$$\text{SCU\_1} = \min(\frac{False\ Count'+True\ Count'}{k'}, 1) \qquad (3)$$

$$\text{SCPP\_1} = \frac{True\ Count'}{False\ Count'+True\ Count'} \qquad (4)$$

$$\text{SCU\_2} = \min(\frac{False\ Count''+True\ Count''}{k''}, 1) \qquad (5)$$

$$\text{SCPP\_2} = \frac{True\ Count''}{False\ Count''+True\ Count''} \qquad (6)$$

In the above equations, SCU_1 is used to characterize the characteristics of the elevator system Ei in the dimension of total number of maintenance requests. SCPP_1 is used to characterize the characteristics of the elevator system Ei in the dimension of positive probability in terms of total number of maintenance requests. False Count' and True Count' are respectively the number of out-of-service events caused by non-equipment failures and the number of out-of-service events caused by equipment failures in the total number of maintenance requests. k' is a positive integer used to standardize the count values or scale them to a specific numerical range. SCU_2 is used to characterize the characteristics in the dimension of number of maintenance requests in a specific operational mode of the elevator system. SCPP_2 is used to characterize the characteristics in the dimension of positive probability in that specific operational mode. False Count" and True Count" are respectively the number of out-of-service events caused by non-equipment failures and the number of out-of-service events caused by equipment failures in the number of maintenance requests in that specific mode. k" is a positive integer used to standardize the count values or scale them to a specific numerical range. The feature vector containing the above four dimensions is also referred to as the local call maintenance feature vector.

In this specification, the necessity of out-of-service event is used to describe the necessity level of dispatching maintenance personnel to the site to carry out maintenance operations. It should be noted that, as will be appreciated from the following description, the determination of necessity depends on various data reflecting the objective attributes of the elevator system (e.g., equipment state data and equipment fault occurrence characteristics, etc.), so the necessity described here is not a subjective indicator. In some examples, necessity is a probability value used to represent the likelihood or probability that maintenance personnel need to be dispatched to the site to restore elevator system service. When considering equipment failures in elevator systems as the determining factor for on-site disposal, necessity can also be seen as a measurement value or probability value used to measure whether or to what extent an out-of-service event is caused by equipment failure.

In some embodiments of the present disclosure, when an elevator system experiences an out-of-service event, data from multiple data sources is utilized to determine the necessity of handling this event. Specifically, in addition to the equipment state data of the elevator system, it is also necessary to consider to introduce operational environment data associated with the elevator system and maintenance records of the elevator system. Data from multiple data sources plays a role in cross validation, thereby improving the accuracy of the determined necessity.

In some specific examples, corresponding features or feature vectors can be generated for data from different data sources, and a vector that comprehensively reflects the characteristics of an out-of-service event (hereinafter referred to as the feature vector of an out-of-service event) can be constructed from these features. By inputting the aforementioned feature vector of the out-of-service event into a trained machine learning model M, the measurement value or probability value of necessity can be obtained. Multiple machine learning algorithms can be used to implement Model M, including but not limited to gradient boosting algorithm, random forest algorithm, and deep learning algorithm.

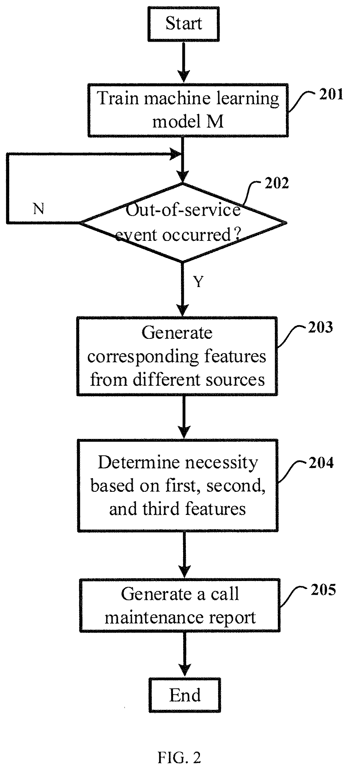

FIG. 2 is a flowchart of a method for analyzing an out-of-service event of an elevator system according to an embodiment of the present disclosure. The method described below can be implemented by various types of computer systems. In some embodiments, at least a portion of computer systems may be implemented using a set of distributed computing devices (also referred to as cloud server clusters or cloud computing platforms) connected by a communication networks, where multiple computing devices operate together to provide services by using their shared resources. In other embodiments, the aforementioned computer systems may be implemented using control systems for controlling multiple elevator systems or controllers within the elevator systems. These computer systems are collectively referred to as devices for analyzing out-of-service events of elevator systems.

The method shown in FIG. 2 begins from step 201. In this step, the device for analyzing an out-of-service event of an elevator system trains the machine learning model M. In a specific example, the machine learning model M can be a gradient boosting decision tree model, which iteratively constructs a series of weak learners (usually decision trees) and accumulates the results of these learners as the final prediction output.

It should be noted that in the method shown in FIG. 2, step 201 is an optional step. For example, when the machine learning model can be obtained through other means (i.e., commercial purchases), step 201 will no longer be necessary.

With continued reference to FIG. 2, in step 202, the device for analyzing an out-of-service event of an elevator system determines whether an out-of-service event has occurred in the elevator system E. If yes, proceed to step 203, otherwise continue waiting.

In step 203, the device for analyzing an out-of-service events of an elevator system generates corresponding features for data from different data sources. By way of example, the feature generated based on the equipment state data of the elevator system E is referred to as the first feature and denoted as $X_1$, or is denoted as $[\chi_{11}, \chi_{12} \cdots \chi_{1n}]$ when the first feature is represented in vector form. The first feature $X_1$ can be, for example, a probability value used to describe the likelihood of equipment failure occurrence, and its generation method will be further described below. For example, the feature generated based on the operational environment data of the elevator system E is referred to as the second feature and denoted as $X_2$, or is denoted as $[\chi_{21}, \chi_{22} \cdots \chi_{2n'}]$ when the second feature is represented in vector form. The second feature $X_2$ is used to describe the equipment failure occurrence characteristics of the reference elevator systems $E_1$, $E_2$ ... $E_m$, which have similar operational environments to the elevator system E, and its generation method will also be further described below. It should be noted that the elevator system E can either be excluded from the reference elevator systems, or it can be a constituent part of the reference elevator systems. For example, the feature generated based on the maintenance records of elevator system E is referred to as the third feature and denoted as $X_3$, or is denoted as $[\chi_{31}, \chi_{32} \cdots \chi_{3n''}]$ when the third feature is represented in vector form. The third feature $X_3$ is used to describe the equipment failure occurrence characteristics of the elevator system E itself, and its generation method will be further described below.

Subsequently, in step 204, the device for analyzing the out-of-service event of the elevator system uses the machine learning model M to determine the necessity of handling the out-of-service event based on the first feature $X_1$, the second feature $X_2$, and the third feature $X_3$. As mentioned above, necessity can be represented in the form of probability values, denoted, for example, as P ($X_1$, $X_2$, $X_3$). The specific determination method regarding necessity will be further described below.

After completing step 204, the process shown in FIG. 2 proceeds to step 205. In step 205, the device for analyzing the out-of-service event of the elevator system generates an evaluation result on whether maintenance personnel need to be dispatched based on the probability value P($X_1$, $X_2$, $X_3$) obtained in step 204. In some specific embodiments, when the probability value P($X_1$, $X_2$, $X_3$) exceeds a set threshold TH, a call maintenance report will be generated that requires dispatching maintenance personnel to the site to handle the out-of-service event. Otherwise, a report that does not require dispatching maintenance personnel will be generated or no report will be generated.

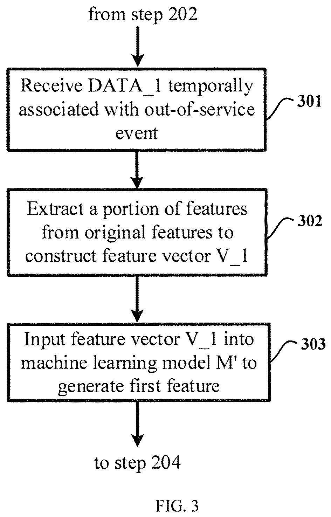

FIG. 3 is a flowchart of a method for analyzing an out-of-service event of an elevator system according to another embodiment of the present disclosure. In this embodiment, it is assumed that the device for analyzing an out-of-service event of an elevator system is a cloud server cluster or a control system for controlling multiple elevator systems. The implementation of the generation method of the first feature in step 203 will be further described below in conjunction with FIG. 3.

The process shown in FIG. 3 begins from step 301, which can, for example, continue after step 202 in FIG. 2. In step 301, the device for analyzing the out-of-service event of the elevator system receives the equipment state data DATA_1 of the elevator system E that is temporally associated with the out-of-service event from the gateway GW connected to the elevator system E. As mentioned above, equipment state data can describe various types of operational states of the elevator system. In some specific embodiments, the device state data DATA_1 includes time series data (a collection of values of some types of device state data at multiple time points near the time point when an out-of-service event occurs, where these types include, for example, the car movement direction, docking floor, state of motion, elevator system operational mode, car door status, and landing door status), snapshot data (i.e., a collection of values of all types of device state data at a specific time point, such as the time point when an out-of-service event occurs), and event data (i.e., used to describe specific types of operations, etc. performed by elevator controllers and drive units near the time point when an out-of-service event occurs).

The data contained in device status data DATA_1 reflects multiple dimensions of the operational state. When it is used directly as the operational state vector, it means more parameters and longer training time. In addition, in many cases, the raw data contains many irrelevant or redundant features that may interfere with the learning process of the model. In step 302, optionally, the device for analyzing the out-of-service event of the elevator system extracts a portion of the original features contained in the equipment state data DATA_1 to construct the operational state feature vector V_1.

Multiple dimensionality reduction techniques can be used to determine the type of extracted features, including but not limited to Principal Component Analysis (PCA), Linear Discriminant Analysis (LDA), t-Distributed Stochastic Neighbor Embedding (t-SNE), and autoencoders.

After completing step 302, the process shown in FIG. 3 proceeds to step 303. In step 303, the device for analyzing the out-of-service event of the elevator system inputs the operational state feature vector V_1 into the machine learning model M' to generate the first feature $X_1$. As mentioned above, the first feature $X_1$ can be a probability value used to describe the likelihood of equipment failure occurrence. Multiple machine learning algorithms can be used to implement model M', including but not limited to classification and regression tree algorithm, gradient boosting algorithm, random forest algorithms, and deep learning algorithm.

After completing step 304, the process shown in FIG. 3 proceeds to step 204 in FIG. 2.

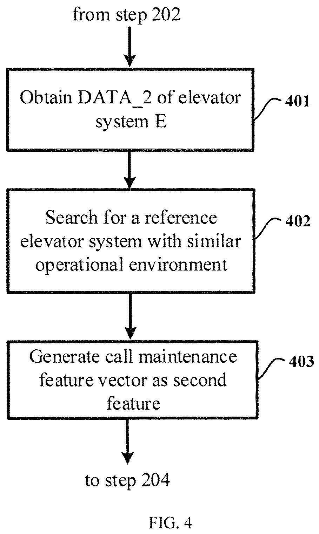

FIG. 4 is a flowchart of a method for analyzing an out-of-service event in an elevator system according to another embodiment of the present disclosure. In this embodiment, it is assumed that the device for analyzing an out-of-service event in an elevator system is a cloud server cluster or a control system for controlling multiple elevator systems. The implementation of the generation method of the second feature in step 203 will be further described in conjunction with FIG. 4.

The process shown in FIG. 4 begins from step 401, which can, for example, continue after step 202 in FIG. 2. In step 401, the device for analyzing the out-of-service event in the elevator system obtains the operational environment data DATA_2 of the elevator system E. For example, the operational environment data DATA_2 can be obtained from a building management system for storing availability data and maintenance information for the elevator system, and/or a service management system for storing the service conditions of the elevator system.

As mentioned above, operational environment data can include various types of data, such as elevator system configuration information, external environment information, and usage status information. Table 1 shows an example of operational environment data:

Table 1

| Maintenance Provider | Property Type | Service Contract Type | Usage Duration | Calendar Day Type | Operational mode |
|---|---|---|---|---|---|
| ZYX | school | P | 3 | working days | NAV |

The various types of data contained in the device state data DATA_2 reflect multiple dimensions of the operational environment of the elevator system, and the attribute feature vector V_2 can be constructed from these types of data. A reasonable assumption is that a group of elevator systems with similar operational environments should typically have sufficiently similar equipment failure occurrence characteristics. In view of this, in step 402, the device for analyzing the out-of-service event of the elevator system can search the database system for a reference elevator system with a similar operational environment to the elevator system E based on the similarity between two attribute feature vectors. For example, the reference elevator systems with similar operational environments found here are referred to as E1, E2•••..Em.

In step 402, the type of extracted features between two vectors can be determined based on various similarity coefficients, including but not limited to Euclidean distance, Manhattan distance, cosine similarity, Jaccard similarity coefficient, Pearson correlation coefficient, and the like.

After completing step 402, the process shown in FIG. 4 proceeds to step 403. In step 403, the device for analyzing the out-of-service event of the elevator system generates a call maintenance feature vector about the reference elevator systems E1, E2... Em as the second feature. The method for determining the call maintenance feature vector has been described in detail above, and will not be repeated here.

After completing step 403, the process shown in FIG. 4 proceeds to step 204 in FIG. 2.

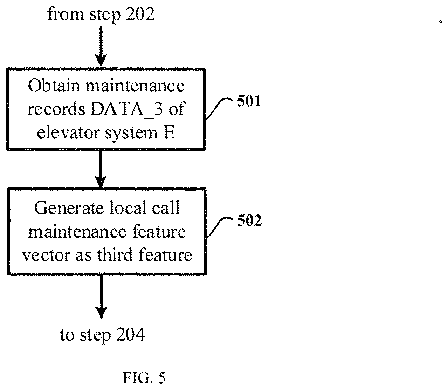

FIG. 5 is a flowchart of a method for analyzing an out-of-service event of an elevator system according to another embodiment of the present disclosure. In this embodiment, it is assumed that the device for analyzing an out-of-service event of an elevator system is a cloud server cluster or a control system for controlling multiple elevator systems. The implementation of the generation method for the third feature in step 203 will be further described in conjunction with FIG. 5.

The process shown in FIG. 5 begins from step 501, which can, for example, continue after step 202 in FIG. 2. In step 501, the device for analyzing the out-of-service event of an elevator system obtains the maintenance record DATA_3 of the elevator system E. For example, the maintenance record DATA_3 can be obtained from a service management system or the like used to store the service status of the elevator system.

After completing step 501, the process shown in FIG. 5 proceeds to step 502. In step 502, the device for analyzing the out-of-service event of the elevator system generates a local call maintenance feature vector about the elevator system E as the third feature. The method for determining the local call maintenance feature vector has been described in detail above, and will not be repeated here.

After completing step 502, the process shown in FIG. 5 proceeds to step 204 in FIG. 2.

It should be noted that the three processes shown in FIGS. 3-5 can be executed in any order. For example, the first feature determination process shown in FIG. 3, the second feature determination process shown in FIG. 4, and the third feature determination process shown in FIG. 5 can be executed in parallel. For another example, these processes can be executed in chronological order. For yet another example, two of these determination processes can be determined in parallel first, and then the remaining determination process can be determined.

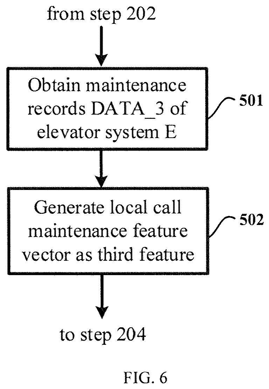

FIG. 6 is a flowchart of a method for analyzing an out-of-service event of an elevator system according to another embodiment of the present disclosure. In this embodiment, it is assumed that the device for analyzing an out-of-service event of an elevator system is a cloud server cluster or a control system for controlling multiple elevator systems. The method for determining necessity in step 204 is described further below in conjunction with FIG. 6.

The process shown in FIG. 6 begins from step 601, which can continue, for example, after step 203 in FIG. 2. In step 601, the device for analyzing an out-of-service event of an elevator system constructs an out-of-service event feature vector based on the first feature $X_1$, second feature $X_2$, and third feature $X_3$ determined in step 203. In step 402, various operations can be used to construct the out-of-service event feature vector, including but not limited to concatenation operation (concatenating multiple vectors end-to-end to form a longer vector), addition or subtraction operation (element-wise addition or subtraction of corresponding dimensions when multiple vectors share the same dimensionality), element-wise multiplication or division operations (element-wise multiplication or division of corresponding dimensions when multiple vectors share the same dimensionality), and outer product operations (performing outer product operations on multiple vectors to generate a matrix).

After completing step 601, the process shown in FIG. 6 proceeds to step 602. In step 602, the device for analyzing the out-of-service event of the elevator system inputs the out-of-service event feature vector into the machine learning model M to generate a measurement or probability value $P(X_1, X_2, X_3)$ regarding necessity. Multiple machine learning algorithms can be used to implement model M, including but not limited to gradient boosting algorithm, random forest algorithm, and deep learning algorithm.

After completing step 602, the process shown in FIG. 6 proceeds to step 205 in FIG. 2.

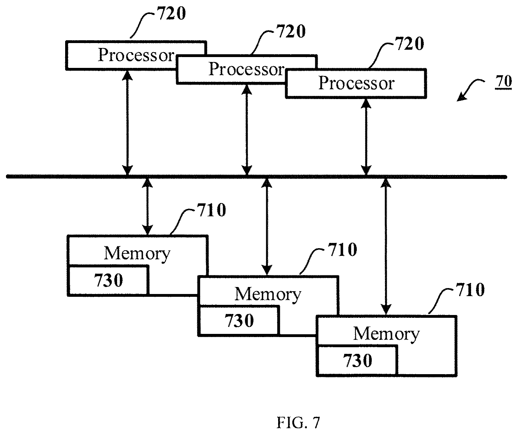

FIG. 7 is a schematic block diagram of an apparatus for determining safety risks of an elevator system according to other embodiments of the present disclosure. This apparatus can be used to implement the steps of the method described above with reference to FIGS. 2-6.

The apparatus 70 shown in FIG. 7 includes one or more memories 710 (e.g., non-volatile memory such as flash memory, ROM, hard disk drive, magnetic disk, optical disk, etc.), one or more processors 720, and computer programs/instructions 730.

The computer programs/instructions 730 are stored in the memory 720 and can be executed by a single processor 720, or by multiple processors 720 (which can be located in the same physical location or different physical locations) working together to perform the steps of the method described above with reference to FIGS. 2-6. The memory 720 can also store data generated by the processor 730 when executing the computer programs 740 and data received from external devices (such as equipment state data, operational environment data, and maintenance records of the elevator system).

Optionally, the apparatus 70 shown in FIG. 7 can be implemented in the form of a cloud computing platform. In this form, the computing, network, storage and other service resources provided by a plurality of memories 710 and a plurality of processors 720 are provided in the form of a resource pool, in which most of the service resources can be hosted on the Internet and allocated to users as needed. In addition, optionally, the apparatus 70 can also be implemented as a standalone system, in which service resources are essentially limited to a single local system, such as a control system for controlling multiple elevator systems or a controller in an elevator system.

Those skilled in the art will appreciate that the various illustrative logical blocks, modules, circuits, and algorithm steps described herein can be implemented as electronic hardware, computer software, or a combination of both.

To demonstrate the interchangeability of hardware and software, various illustrative components, blocks, modules, circuits, and steps have been described above generally in terms of their functionality. Whether such functionality is implemented in the form of hardware or software depends on the particular application and the design constraints imposed on the overall system. Those skilled in the art may implement the described functionality in varying ways for a particular application. However, such implementation decisions should not be interpreted as causing a departure from the scope of the present disclosure.

Although only some of the specific embodiments of the present disclosure have been described, those skilled in the art shall appreciate that the present disclosure may, without departing from the spirit and scope thereof, be implemented in many other forms. Accordingly, the examples and embodiments shown are to be regarded as illustrative but not restrictive, and the present disclosure may cover various modifications and replacements without departing from the spirit and scope of the present disclosure as defined by the appended claims.

The embodiments and examples presented herein are provided to best illustrate the embodiments in accordance with the technology and its particular applications, and to thereby enable those skilled in the art to implement and utilize the present disclosure. However, those skilled in the art would appreciate that the above description and examples are provided for the convenience of illustration and example only. The description set forth herein is not intended to cover every aspect of the present disclosure or to limit the present disclosure to the precise form disclosed.

## Claims

1.    A method for analyzing an out-of-service event of an elevator system, the method comprising following steps executed in response to occurrence of the out-of-service event:

   generating a first feature, a second feature, and a third feature, wherein, the first feature is used to describe likelihood of equipment failure occurring in the elevator system, the second feature is used to describe equipment failure occurrence characteristics of a reference elevator system with a similar operational environment to the elevator system, and the third feature is used to describe equipment failure occurrence characteristics of the elevator system; and
   using a first machine learning model to determine necessity of handling the out-of-service event based on the first feature, the second feature, and the third feature.

2.    The method according to claim 1, wherein steps of generating the first feature comprises:

   generating an operational state feature vector based on equipment state data of the elevator system temporally associated with the out-of-service event; and
   inputting the operational state feature vector into a second machine learning model to obtain the first feature,

wherein, the second machine learning model adopts one of following algorithms: classification and regression tree algorithm, gradient boosting algorithm, random forest algorithm, and deep learning algorithm, where the first feature is represented as a probability value of equipment failure occurring in the elevator system.

3. The method according to claim 1 or 2, wherein the equipment state data describes multiple types of operational states of the elevator system, the types of operational states comprising one or more of the following: elevator system operational mode, car movement direction, car current floor, car leveling alignment status, traction machine movement status, car door and landing door opening/closing status, control cabinet fault code, and drive unit fault code.

4. The method according to any of claims 1 to 3, wherein steps of generating the second feature comprises:

   generating an attribute feature vector about the elevator system based on operational environment data associated with the elevator system;
   searching for a reference elevator system with sufficient similarity to the attribute feature vector; and
   generating a call maintenance feature vector about the reference elevator system as the second feature.

5. The method according to claim 4, wherein the operational environment data comprises one or more of the following: purpose of a building housing the elevator system, cumulative service duration of the elevator system, operational mode of the elevator system when the out-of-service event occurs, maintenance provider of the elevator system, and type of current calendar day.

6. The method according to claim 4 or 5, wherein the call maintenance feature vector comprises a component for describing the number of reported repairs of the reference elevator system due to out-of-service events, and a component for describing a proportion of the number of out-of-service events caused by equipment failure to the number of reported repairs.

7. The method according to any of claims 1 to 6, wherein steps of generating the third feature comprises:
   generating a local call maintenance feature vector about the elevator system based on maintenance records associated with the elevator system as the third feature.

8. The method according to claim 7, wherein the local call maintenance feature vector comprises a component for describing the number of reported repairs of the elevator system due to out-of-service events, and a component for describing a proportion of the number of out-of-service events caused by equipment failure to the number of reported repairs.

9. The method according to any of claims 1 to 8, wherein steps of determining the necessity comprises:

   constructing an out-of-service event feature vector from the first feature, the second feature, and the third feature;
   inputting the out-of-service event feature vector into the first machine learning model to obtain a measurement value about the necessity,
   wherein, the first machine learning model adopts one of the following algorithms: gradient boosting algorithm, random forest algorithm, and deep learning algorithm.

10. The method according to claim 9, further comprising:
    generating a call for maintenance report when the measurement value about the necessity exceeds a set threshold.

11. The method according to any of claims 1 to 10, wherein the steps of the method are executed in a cloud server cluster.

12. An apparatus for analyzing an out-of-service event of an elevator system, comprising:

    at least one processor;
    at least one memory; and
    a computer program stored on the memory, which, when executed on the processor, responds to occurrence of the out-of-service event and causes operations according to the method of any of claims 1 to 11.

13. A non-transitory computer-readable storage medium storing a computer program/instruction, wherein steps of the method according to any of claims 1-11 are executed by a processor executing the computer program/instruction.

**14.** A computer program product comprising a computer program/instruction, wherein the steps of the method according to any of claims 1-11 are executed by executing the computer program/instruction by a processor.

FIG. 1

FIG. 2

from step 202

Receive DATA_1 temporally associated with out-of-service event ⌐301

Extract a portion of features from original features to construct feature vector V_1 ⌐302

Input feature vector V_1 into machine learning model M' to generate first feature ⌐303

to step 204

FIG. 3

from step 202

Obtain DATA_2 of elevator system E — 401

Search for a reference elevator system with similar operational environment — 402

Generate call maintenance feature vector as second feature — 403

to step 204

FIG. 4

from step 202

Obtain maintenance records DATA_3 of elevator system E ⌐ 501

Generate local call maintenance feature vector as third feature ⌐ 502

to step 204

FIG. 5

from step 202

Obtain maintenance
records DATA_3 of
elevator system E — 501

Generate local call
maintenance feature
vector as third feature — 502

to step 204

FIG. 6

FIG. 7

Europäisches
Patentamt
European
Patent Office
Office européen
des brevets

# EUROPEAN SEARCH REPORT

**Application Number**

EP 25 21 4995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2021 134027 A (HITACHI BUILDING SYST CO LTD) 13 September 2021 (2021-09-13) * the whole document * ----- | 1-14 | INV. B66B5/00 |
| A | AU 2021 107 643 A4 (HITACHI BUILDING TECHNOLOGY GUANGZHOU CO LTD [CN]) 20 January 2022 (2022-01-20) * abstract * * paragraphs [0053] - [0080] * * figures 2-5 * ----- | 1-14 | |
| A | CN 110 929 934 A (SHENZHEN GI DOMINO TECH CO LTD) 27 March 2020 (2020-03-27) * the whole document * ----- | 1-14 | |

**TECHNICAL FIELDS SEARCHED (IPC)**

B66B

The present search report has been drawn up for all claims

| Place of search | Date of completion of the search | Examiner |
|---|---|---|
| The Hague | 31 March 2026 | Oosterom, Marcel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 4995

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | Publication date | Patent family member(s) | | Publication date |
|---|---|---|---|---|---|
| JP 2021134027 | A | 13-09-2021 | JP | 7198235 B2 | 28-12-2022 |
| | | | JP | 2021134027 A | 13-09-2021 |
| AU 2021107643 | A4 | 20-01-2022 | AU | 2021107643 A4 | 20-01-2022 |
| | | | CN | 112365066 A | 12-02-2021 |
| | | | WO | 2022105266 A1 | 27-05-2022 |
| CN 110929934 | A | 27-03-2020 | NONE | | |

EPO FORM P0459

For more details about this annex : see Official Journal of the European Patent Office, No. 12/82